(19) Europäisches Patentamt
European Patent Office
Office européen des brevets

(11) EP 2 674 610 B1

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(51) Int Cl.:
***F03B 17/02*** *(2006.01)*

(21) Anmeldenummer: **13003037.2**

(22) Anmeldetag: **13.06.2013**

(54) **Alternatives Kraftwerkskonzept**

Alternative power plant concept

Concept de centrale alternatif

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2012 DE 102012210136**

(43) Veröffentlichungstag der Anmeldung:
**18.12.2013 Patentblatt 2013/51**

(73) Patentinhaber: **Wald, Klaus**
**36129 Gersfeld/Rhön (DE)**

(72) Erfinder: **Wald, Klaus**
**36129 Gersfeld/Rhön (DE)**

(74) Vertreter: **Rings, Rolf et al**
**Patentanwalt**
**Postfach 81 07 01**
**81907 München (DE)**

(56) Entgegenhaltungen:
**WO-A1-2012/044525    US-A1- 2003 214 135**
**US-A1- 2012 031 090**

EP 2 674 610 B1

EP 2 674 610 B1

**Beschreibung**

Die Erfindung betrifft ein Kraftwerk zur umweltschonenden Erzeugung mechanischer oder elektrischer Energie.

In Zeiten zunehmender Ressourcenknappheit und einer sich verschärfenden Treibhausgasproblematik, kommt der umweltschonenden Energieerzeugung zunehmend größere Bedeutung zu.

Im Stand der Technik sind verschiedene Formen von Kraftwerken bekannt, welche mittels eines Auftriebskörpers in einem Fluid Energie erzeugen: Die US 2012/031090 A1 beschreibt ein auf dem hydraulischen Auftriebsprinzip basierendes Kraftwerk, bei welchem mehrere mit einem Fluid befüllte Rohre kreuzförmig im Inneren eines kreisförmigen Rads montiert sind. Das Rad wird von außen über Walzen und einen elektrischen Motor in Drehung angetrieben, so dass die Auftriebskörper in den Rohren sich jeweils nach oben und nach unten bewegen. Die dabei entstehende Energie wird anhand von einem mit den Auftriebskörpern gekoppelten Generator in elektrische Energie umgewandelt.

Aus der WO 2012/044525 A1 ist ebenfalls ein Kraftwerk mit einem Auftriebskörper in einer Flüssigkeit bekannt, wobei hier an der Bewegungsstrecke des Auftriebskörpers eine Mehrzahl von Generatoren im Inneren eines Behälters montiert ist. In dem Auftriebskörper ist eine Kombination von einem Kolben und einem Zylinder vorhanden, um den Auftriebskörper jeweils in die nach unten gehende Richtung und die nach oben gehende Richtung zu bewegen.

Die US-Anmeldung US 2003/214135 A1 wiederum betrifft ein Kraftwerk mit mehreren, mit einem Fluid befüllten Kammern, in denen versetzt zueinander jeweilige Auftriebskörper angeordnet sind. Die Auftriebskörper sind mit einer gemeinsamen Welle gekoppelt, an der ein Generator zum Erzeugen von elektrischem Strom vorgesehen wird. Die jeweiligen Säulen bzw. Kammern werden über Ventile und Pumpen mit einem Fluid befüllt und entleert, damit die drei Auftriebskörper versetzt zueinander sich nach oben und nach unten bewegen.

Der Erfindung liegt die Aufgabe zugrunde, einen Beitrag zur umweltfreundlichen Energieerzeugung zu leisten.

Diese Aufgabe wird erfindungsgemäß durch ein Kraftwerk gelöst, das mindestens einen ganz oder teilweise mit einer Flüssigkeit gefüllten länglichen Behälter umfasst, wobei in dem Behälter ein Auftriebskörper angeordnet ist, und wobei eine Bewegung des Auftriebskörpers relativ zu dem Behälter zur Erzeugung mechanischer oder elektrischer Energie genutzt wird.

Das der Erfindung zugrunde liegende Prinzip besteht darin, die Auftriebskraft des Auftriebskörpers zu nutzen, um Arbeit zu leisten. Diese Arbeit kann dann als mechanische oder elektrische Energie einer weiteren Nutzung zugeführt werden. Um kontinuierlich mechanische oder elektrische Energie erzeugen zu können, ist der mindestens eine Behälter um eine Drehachse drehbar gelagert, wobei eine Längsachse des Behälters im Wesentlichen lotrecht zu der Drehachse verläuft.

Dadurch ist es möglich, durch Drehen des Behälters um 180° den Auftriebskörper wieder an die ursprüngliche Position, nämlich unten in den Behälter zu bringen, so dass seine Auftriebskraft erneut zur Energieerzeugung genutzt werden.kann.

Eine besonders wirkungsvolle und effektive Art der Drehlagerung ist darin zu sehen, dass der mindestens eine Behälter in einem vorzugsweise zylindrischen Schwimmkörper befestigt ist, wobei die Drehachse des Behälters und eine Längsachse des Schwimmkörpers parallel zueinander verlaufen. Dies bedeutet, dass es nun möglich ist, den Schwimmkörper, der ähnlich einem Baumstamm im Wasser liegt, mit geringem Energieeinsatz, beispielsweise nur durch die Strömung eines Gewässers, in Drehung zu versetzen und dadurch einen Arbeitshub des Auftriebskörpers nach dem anderen auszulösen. Dadurch wird an dem Auftriebskörper kontinuierlich bzw. nacheinander immer wieder mechanische Energie abgegeben, die zum Beispiel von einem Generator in elektrische Energie umgewandelt wird.

Zusätzlich oder alternativ zu der Strömung des Gewässers kann der Schwimmkörper auch auf andere Weise drehangetrieben werden; beispielsweise durch einen externen Antrieb des Schwimmkörpers. Dies kann entweder durch ein Reibrad oder ein Zugmittelgetriebe wie z.B. eine Kette, ein Zahnriemen oder einen Flachriemen erfolgen.

Der Drehschwimmkörper kann auch durch die Strömungsgeschwindigkeit des ihn umgebenden Wassers angetrieben werden. Wenn der Schwimmkörper in einem Fließgewässer schwimmt und er beispielsweise über Seile am Ufer befestigt ist, dann kann die Strömungsgeschwindigkeit des Fließgewässers genutzt werden, um den Schwimmkörper in Drehung zu versetzen.

Dies ist natürlich auch möglich, wenn der Schwimmkörper in einem sogenannten stehenden Gewässer schwimmt oder schwebt, und wenn in diesem Gewässer eine lokale Strömung vorhanden ist. Auch existieren bei vielen Gewässern, sei es ein See oder ein Meer, unterhalb der Wasseroberfläche Strömungen. Diese Strömungen können ebenfalls genutzt werden, um den Schwimmkörper anzutreiben. Wichtig ist dabei natürlich, dass das den Schwimmkörper umgebende Wasser an einer Seite des Schwimmkörpers und an der Gegenseite des Schwimmkörpers eine unterschiedliche Geschwindigkeit beziehungsweise Richtung hat, weil dann ist die Antriebsleistung des Wassers am größten.

Es ist auch möglich, den Schwimmkörper mit Hilfe von Wasserstrahldüsen in Drehung zu versetzen. Auch kann der Schwimmkörper durch ein Segel oder durch einen Drachen, in Drehung versetzt werden. In diesem Fall wird der Schwimmkörper von dem Segel oder Drachen durch das stehende Gewässer gezogen. Dadurch stellt sich die gewünschte relative Strömungsgeschwindigkeit zwischen dem Schwimmkörper und dem ihn umgebenden Wasser ein und der Schwimmkörper wird in Drehung versetzt.

Um die von dem Auftriebskörper beim Aufsteigen durch die Flüssigkeit in dem Behälter geleistete Arbeit nutzen zu können, ist der Auftriebskörper über ein Getriebe mit mindesten einem Generator, bevorzugt jedoch zwei Generatoren, gekoppelt. Das Getriebe kann als Zugmittelgetriebe ausgebildet sein, indem der Generator beispielsweise über ein Zugseil mit dem Auftriebskörper verbunden ist. Wenn sich der Generator an dem unteren Ende des Behälters befindet und der Auftriebskörper durch die Flüssigkeit in dem Behälter nach oben steigt, kann diese Auftriebskraft über das Zugmittel auf eine Trommel oder eine Rolle übertragen werden, die wiederum mit dem Generator gekoppelt ist. Dadurch wird die beim Aufschwimmen des Auftriebskörpers geleistete Arbeit effektiv und auf einfache Weise in eine Drehbewegung des Generators umgewandelt. Diese Drehbewegung wird vom Generator wiederum in elektrische Energie umgewandelt.

Wenn nun der Auftriebskörper seinen oberen Endpunkt erreicht hat, wird der Behälter um 180° gedreht, so dass der Auftriebskörper erneut ans untere Ende des Behälters gelangt und er wieder Auftriebsarbeit an einen zweiten Generator über ein zweites Zugseil abgeben kann.

Damit sich die beiden Generatoren an den Enden des Behälters nicht gegenseitig behindern bzw. in ihrer Bewegung blockieren, sind in vorteilhafter Weise schaltbare Kupplungen zwischen den Getrieben und dem Auftriebskörper vorgesehen. Das bedeutet, dass durch eine geeignete Ansteuerung der schaltbaren Kupplungen jeweils ein Generator ausgekuppelt werden kann, während der andere Generator zur Stromerzeugung eingesetzt wird. Dies kann im Wechsel erfolgen und entweder durch ein Steuergerät gesteuert werden.

Alternativ ist es auch möglich, eine mechanische Umschaltung vorzunehmen, je nach der Drehposition des Behälters. Bei manchen Bauarten von Generatoren ist es auch möglich, den Generator "elektrisch" von dem Zugseil so zu entkoppeln, dass der Generator dem Seil beim Abwickeln von der Trommel keinen nennenswerten Widerstand entgegensetzt.

Erfindungsgemäß kann das Kraftwerk auch einen Ballasttank aufweisen, wobei der mindestens eine Ballasttank während des Betriebs des Kraftwerks mit Ballast, bevorzugt mit Wasser oder einer anderen Flüssigkeit, befüllt oder entleert werden kann. Durch das Befüllen des Ballasttanks nimmt das Gesamtgewicht des erfindungsgemäßen Kraftwerks zu, so dass das Kraftwerk nicht mehr schwimmt, sondern bei entsprechender Befüllung des mindestens einen Ballasttanks unter die Oberfläche sinkt und dort entweder einen Schwebezustand einnimmt oder sogar bis auf den Grund des Gewässers absinkt. Diese dabei auftretende Kraft kann erfindungsgemäß zur Stromerzeugung in einem externen Generator genutzt werden. Als "extern" wird ein Generator im Zusammenhang mit der Erfindung bezeichnet, wenn er außerhalb des Schwimmkörpers angeordnet ist.

Wenn das Kraftwerk weit genug nach unten abgesunken ist, wird der Ballasttank entleert, so dass das Kraftwerk wieder an die Oberfläche des Wassers steigt. Hierbei legt das gesamt Kraftwerk eine Strecke S zurück, die entsprechend den Formeln

$$W = F \times S \quad \text{(Gl.1) (ohne Drehung nur durch die Schwerkraft des Schwimmkörpers)}$$

$$W = 2 \times F \times S \times \text{Rotation des Schwimmkörpers mit internem Generator beim Absinken des Schwimmkörpers (Gl.2)}$$

$$W = 2 \times F \times S \times \text{Rotation des Schwimmkörpers mit internem Generator beim Aufsteigen des Schwimmkörpers (Gl.3)}$$

In den Gleichungen 2 und 3 ist ein Faktor 2 vorhanden, weil zwei Arbeitshübe pro Umdrehung des Schwimmkörpers stattfinden.

Die derart gewonnenen elektrische Energie wird über eine Leitung zu dem Schiff geleitet. zur Energieerzeugung genutzt werden kann. Das Befüllen und Entleeren des mindestens einen Ballasttanks erfolgt bevorzugt durch eine elektrisch angetriebene Pumpe. Allerdings ist die Erfindung nicht auf diese und elektrisch angetriebene Pumpen beschränkt.

Als Ballasttank kann der oder die Behälter und/oder der Schwimmkörper selbst des Kraftwerks dienen.

Um die Stromerzeugung zu vergleichmäßigen und die Leistung zu erhöhen, können mehrere Auftriebskörper mit den zugeordneten Getrieben und Generatoren sowie erforderlichenfalls Kupplungen nebeneinander drehbar gelagert sein. Dabei ist es besonders vorteilhaft, wenn die Auftriebskörper in Drehrichtung versetzt zueinander angeordnet sind, weil dadurch die Stromerzeugung gleichmäßiger wird.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Zeichnung

Es zeigen

Fig. 1 ein Ablaufdiagramm des in dem erfindungsgemäßen Kraftwerk ablaufenden Verfahrens;
Fig. 2 ein Teillängsschnitt durch ein Ausführungsbeispiel eines erfindungsgemäßen Kraftwerks;
Fig. 3 Prinzipskizzen des erfindungsgemäßen Kraftwerks zur Erläuterung der Funktionsweise;
Fig. 4 in zwei Ausschnitten ein modular ausgeführtes erfindungsgemäßes Kraftwerk;
Fig. 5 ein weiteres Ausführungsbeispiel eines erfindungsgemäßen Kraftwerks mit Ballasttanks und einer Seiltrommel; sowie
Fig. 6 ein weiteres Ausführungsbeispiel eines erfindungsgemäßen Kraftwerks mit zwei Seiltrommeln, das am Boden eines Gewässers verankert ist.

**Beschreibung der Ausführungsbeispiele**

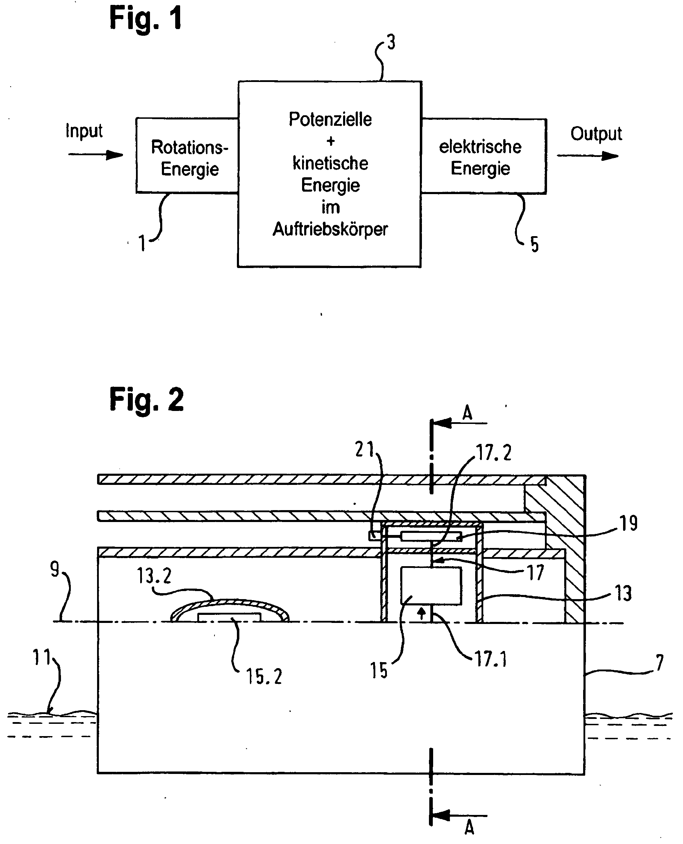

In der Figur 1 werden in Form einer Prinzipdarstellung die drei Stufen des dem erfindungsgemäßen Kraftwerk zugrundeliegenden Verfahrens erläutert. Dabei läuft das Verfahren in Figur 1 von links nach rechts ab. In einem ersten Schritt 1 wird einem Behälter und einem darin befindlichen Auftriebskörper Rotationsenergie zugeführt.

Anschließend wird in einem zweiten Schritt 3 der potentiellen Energie des Auftriebskörpers die Rotationsenergie überlagert. Sobald der Auftriebskörper in dem Behälter durch die Rotationsenergie an den tiefsten Punkt angelangt ist, schwimmt er in einer im Wesentlichen translatorischen Bewegung nach oben auf und leistet dabei Arbeit. Diese Arbeit wird in einem dritten Block 5 in elektrische Energie umgewandelt.

In der Figur 2 ist ein Ausführungsbeispiel eines erfindungsgemäßen Kraftwerks mit einem zylindrischen Schwimmkörper 7 teilweise geschnitten dargestellt. Eine Symmetrieachse bzw. Drehachse des Schwimmkörpers 7 ist durch die strichpunktierte Linie 9 angedeutet. Eine Wasseroberfläche ist mit dem Bezugszeichen 11 gekennzeichnet.

Orthogonal zu der Drehachse 9 ist ein länglicher und Behälter 13 in dem Schwimmkörper 7 angeordnet. Der Behälter 13 ist mindestens teilweise mit einer Flüssigkeit, bevorzugt Wasser (nicht dargestellt), gefüllt. In der Flüssigkeit schwimmt ein Auftriebskörper 15. Der Auftriebskörper 15 hat ein niedrigeres spezifisches Gewicht als die ihn umgebende Flüssigkeit (sonst würde er nicht schwimmen), so dass auf ihn eine Auftriebskraft $F_A$ wirkt, die ihn in Figur 2 nach oben treibt.

An dem Auftriebskörper 15 ist an beiden Seiten jeweils ein Seil 17 angeordnet, dass über eine Trommel 19 mit einem Generator 21 in Wirkverbindung steht. In der in Figur 2 dargestellten (Dreh-)Stellung des Schwimmkörpers 7 schwimmt der Auftriebskörper 15 nach oben, so dass auf das an der Unterseite des Auftriebskörpers 15 befestigte Seil 17.1 eine Zugkraft wirkt. Diese Kraft wird über eine in Figur 2 nicht sichtbare Trommel 19.2 auf einen in der unteren Hälfte des Schwimmkörpers 7 angeordneten Generator 21.1 übertragen und dadurch elektrische Energie erzeugt.

Wenn nun der Auftriebskörper 15 seinen "oberen Totpunkt" in dem Behälter 13 erreicht hat, kommt die Stromerzeugung kurzzeitig zum Erliegen.

Erfindungsgemäß wird nun der Schwimmkörper 7 um 180° um seine Drehachse 9 weitergedreht, so dass der Auftriebskörper 15 wieder nach unten gelangt und er erneut Arbeit leisten kann, indem er von unten nach oben aufschwimmt. Die geleistete Arbeit wird über das Zugseil 17.2 in ähnlicher Weise wie zuvor beschrieben auf den anderen am gegenüberliegenden Ende des Behälters angeordneten Generator 21.2 übertragen.

Da die erfindungsgemäße Stromerzeugung nicht kontinuierlich erfolgt, ist es vorteilhaft, mehrere solcher Behälter 13 mit Auftriebskörpern 15, Seilen 17 und Generatoren 21 in einem Schwimmkörper 7 anzuordnen und diese in Drehrichtung des Schwimmkörpers 7 versetzt zueinander anzuordnen. Im linken Teil der Figur 2 sind ein zweiter Behälter 13.2 und ein zweiter Auftriebskörper 15.2 teilweise sichtbar dargestellt. Die Längsachse des zweiten Behälters 13.2 verläuft orthogonal zur Zeichnungsebene.

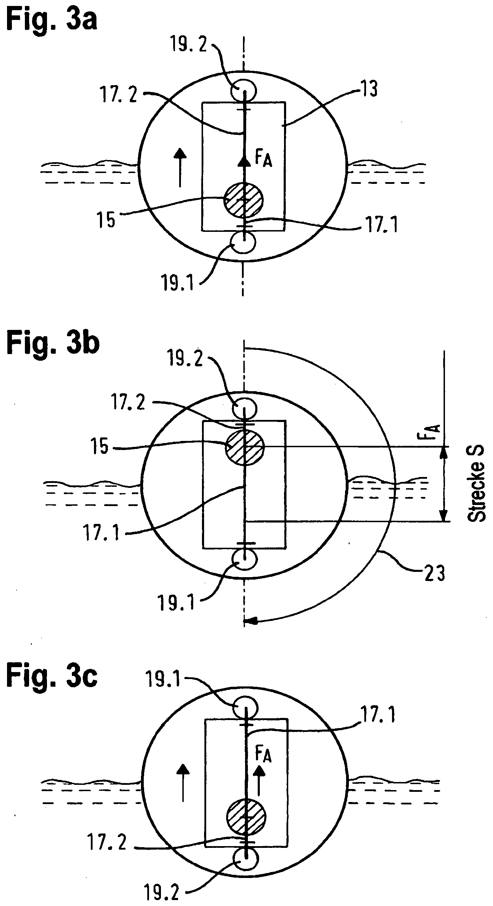

Anhand der Figur 3 wird nun das Funktionsprinzip nochmals verdeutlicht. Die Figur 3 stellt einen Schnitt entlang der Linie AA gemäß Figur 2 dar.

In der Figur 3a ist der Schwimmkörper 7 so positioniert, dass der Behälter 13 mit seiner Längsachse 21 vertikal ausgerichtet ist und der Auftriebskörper 15 sich in dem in Figur 3a unteren Ende des Behälters 13 befindet. Weil der Behälter 13 mit Wasser gefüllt ist, wirkt auf den Auftriebskörper 15 eine Auftriebskraft $F_A$, die ihn nach oben, d.h. im Wesentlichen parallel zur Längsachse 21 des Behälters 13, treibt. Diesen Effekt macht sich das erfindungsgemäße Kraftwerk zunutze, indem es die Auftriebskraft $F_A$ über das Seil 17.1 an einen Generator 21.1 überträgt. Dabei können Umlenkrollen, Trommeln 19.1 , 19.2 oder andere Umlenkmittel vorgesehen sein.

Die Generatoren 21.1 und 21.2 sind in der Figur 3 nicht sichtbar, vor allem weil sie durch die Trommeln 19.1, 19.2 verdeckt sind

Wenn nun der Auftriebskörper 15 von der in Figur 3a dargestellten unteren Position in die in der Figur 3b dargestellte obere Position aufschwimmt, dann leistet er eine Arbeit, die sich nach der Formel W = $F_A$ x S berechnet.

Die Strecke S ist in der Figur 3b durch einen Doppelpfeil angedeutet. Sie entspricht der Ortsveränderung des Auftriebskörpers 15 beim Aufschwimmen in dem Behälter 13. Die Arbeit W wird über das Seil 17.1 über die Trommel 19.1 an den in Figur 3 nicht sichtbaren Generator 21.1 übertragen, der sich in der dargestellten Position am unteren Ende des Behälters 13 befindet.

An dem in den Figuren 3a und 3b oberen Ende des Behälters 13 befindet sich ein zweiter Generator 21.2 (nicht sichtbar), der ebenfalls über ein Seil 17.2 und eine Trommel 19.2 mit dem Auftriebskörper 15 gekoppelt ist. Das zweite Seil 17.2 wird während des Aufschwimmens des Auftriebskörpers 15 auf die Trommel 19.2 aufgewickelt. Dazu ist nahezu keine Energie erforderlich, weil die Seile 17.1 und 17.2 biegeschlaff sind.

Wenn nun der Auftriebskörper 15 bis oben aufgeschwommen ist, dann wird der Schwimmkörper 7 um etwa 180° weitergedreht, was durch einen gekrümmten Pfeil 23 in der Figur 3b angedeutet ist. Dies bedeutet, dass die Generatoren 21.1 und 21.2 und die Trommeln 19.1 bzw. 19.2 ihre Plätze tauschen, so dass nun der Generator 21.2 mitsamt der Trommel 19.2 unten angeordnet ist, während sich der Generator 21.1 und die Trommel 19.1 "oben" befinden. Nun wirkt erneut eine Auftriebskraft $F_A$ auf den Auftriebskörper 15, der nun von der dieser Auftriebskraft $F_A$ in Richtung der ersten Trommel 19.1, d.h. nach oben, gezogen wird. Dadurch wird das Seil 17.2 unter Spannung gesetzt, so dass es über die Spule 19.2 den nicht sichtbaren zweiten Generator 21.2 antreibt.

Gleichzeitig wird das Seil 17.1 auf die erste Trommel 19.1 aufgewickelt. Das Aufwickeln kann durch eine Spiralfeder (nicht dargestellt) oder durch den nun als Elektromotor betriebenen ersten Generator 21.1 erfolgen.

Die geschilderten Verfahrensschritte erfolgen im Wechsel, so dass einmal der Generator 21.1 Elektrizität erzeugt, während der gegenüberliegende Generator 21.2 das zugehörige Seil 17.2 auf die Spule 19.2 aufwickelt. Nach einer Drehung des Schwimmkörpers 7 um etwa 180° erzeugt nun der zweite Generator 21.2 elektrische Energie, während das dem ersten Generator 21.1 zugeordnete Seil 17.1 aufgewickelt wird.

Bei dieser Ausführung mit nur einem Behälter 13 ist eine kontinuierliche Stromerzeugung nicht möglich, weil es bei jeder Umdrehung des Schwimmkörpers 7 um 360°, jeweils bei 0° und bei 180° einen "Arbeitshub" des Auftriebskörpers 15 gibt. Wenn der Schwimmkörper 7 einen Drehwinkel von 90° bzw. 270° aufweist, dann kann der Schwimmkörper 15 keine Arbeit abgeben.

Die Elektrizitätserzeugung kann dadurch vergleichmäßigt werden, dass um einen Winkel von 90° verdreht ein zweiter Behälter 13.2 mit Auftriebskörper 15.2 und zugehörigen Seilen 17, Spulen 19 und Generatoren 21 angeordnet wird. Diese Situation ist in der Figur 2 angedeutet.

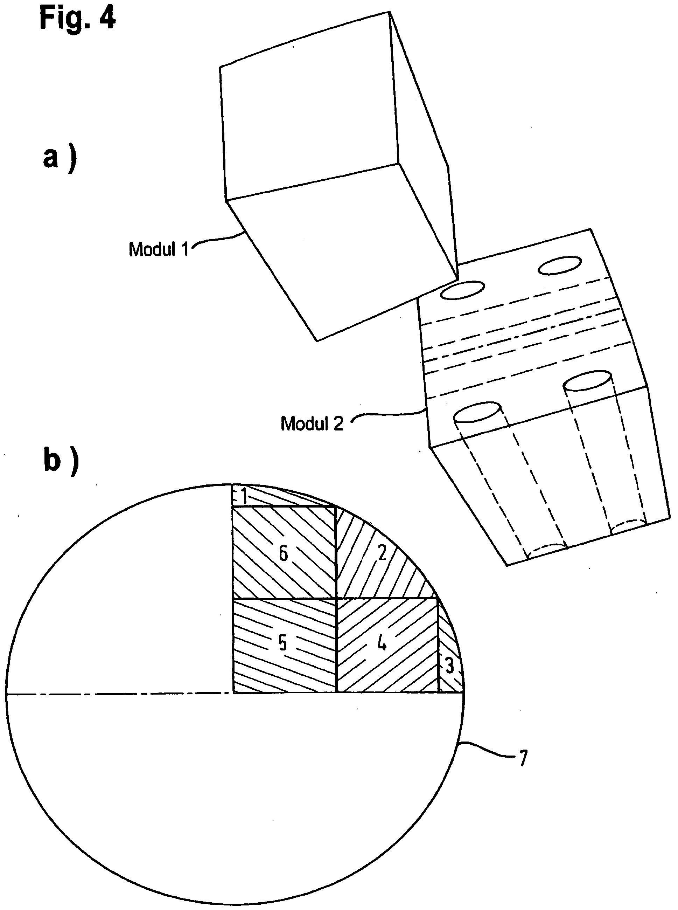

In der Figur 4 ist schematisch und stark vereinfacht ein modular aufgebautes Ausführungsbeispiel eines erfindungsgemäßen Kraftwerks dargestellt. Die Figur 4b zeigt einen Schwimmkörper 7 im Querschnitt. Dabei sind im ersten Quadranten dieses Querschnitts insgesamt sechs Module 1 als schraffierte Flächen angedeutet. Die Module 1 bis 6 umfassen mindestens jeweils einen Behälter 13, einen Auftriebskörper 15 und einen Generator 21 und sind als "autarke" Teilsysteme ausgebildet. Erfindungsgemäß ist nun vorgesehen, den Schwimmkörper 7 möglichst dicht mit einer Vielzahl von Modulen zu bestücken. Dadurch kann die Leistungsfähigkeit des erfindungsgemäßen Kraftwerks erhöht werden, ohne Die äußeren Abmessungen des Schwimmkörpers können modular bequem auf beliebig große Dimensionen gebracht bzw. montiert werden. Werden; zum Beispiel durch ein modulares Baukastensystem.

Die Ausbildung der Merkmale bleibt gleich, nur an den Positionen an denen Module angebracht sind, sind Mittel zur Anbringung erforderlich, wie in Figur 2 beschrieben.In dem dargestellten Ausführungsbeispiel könnten also 24 Module, von denen nur die Module 1 bis 6 im ersten Quadranten dargestellt sind, untergebracht werden. Selbstverständlich lässt sich auch dieses Ausführungsbeispiel noch skalieren, beispielsweise indem die Länge des Schwimmkörpers 7 und/oder der Durchmesser des Schwimmkörpers 7 geändert wird. Aus der eher schematisch angelegten Figur 4 wird deutlich, dass das erfindungsgemäße Kraftwerk aus einer Vielzahl standardisierter und in Serie gefertigten Modulen zusammengesetzt werden kann. Die Module können zum Beispiel als kraftaufnehmende Module (Welle, Getriebe und Generator) ausgebildet sein, die jeweils am Ende des Auftriebswegs angeordnet sind.

Anders ausgedrückt: Der Schwimmkörper wird skaliert in Modul- und Segmentbauweise mit den benötigten Maßen oder als Würfel (mit den Merkmalen gemäß Figur 2) zusammengesetzt.

Dadurch wird nicht nur die Leistungsfähigkeit des Kraftwerks erhöht, sondern auch die Herstellungskosten verringert und die Zuverlässigkeit aller Komponenten beziehungsweise Module verbessert.

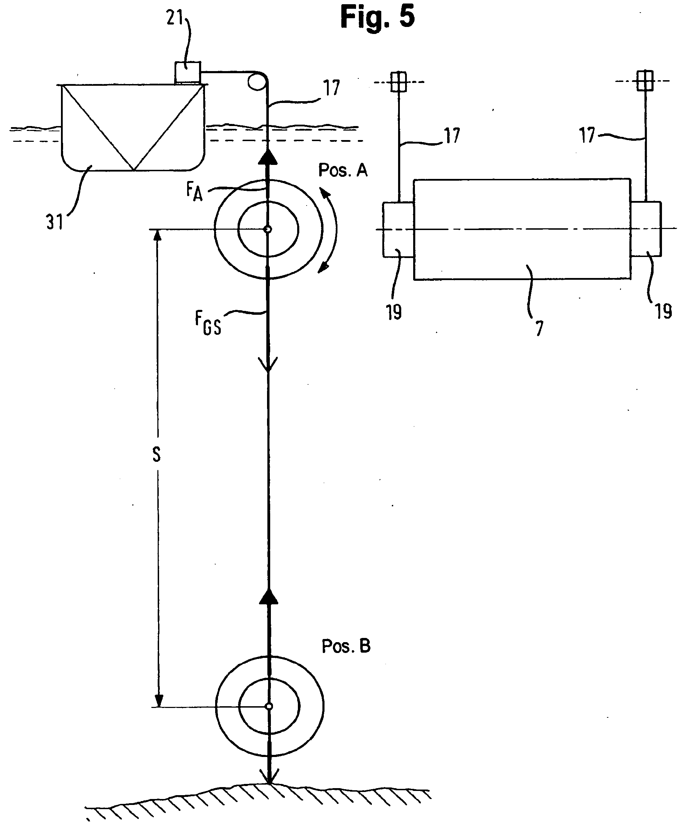

In Figur 5 ist ein Ausführungsbeispiel eines erfindungsgemäßen Kraftwerks dargestellt, bei dem das Kraftwerk an einem schwimmenden Körper 31 angeordnet ist. Der schwimmende Körper 31 kann ein Schiff oder ein Ponton sein.

Bei diesem Ausführungsbeispiel dient der Schwimmkörper 7 gleichzeitig als Ballasttank. Um den Ballasttank beziehungsweise den Schwimmkörper 7 zu entleeren, wird Pressluft in das Innere des Ballasttanks 7 geblasen. Dadurch wird das Wasser (der Ballast) aus dem Ballasttank 7 verdrängt und der Schwimmkörper 7 entwickelt wieder eine Auftriebskraft.

In dem oberen Teil der Figur 5 ist der Schwimmkörper 7 mit Ballast gefüllt (Position A). Daher ist die auf den Schwimmkörper 7 wirkende Kraft $F_{GS}$ vom Betrag her größer als die Auftriebskraft $F_a$. Weil die Auftriebskraft $F_a$ und die Gewichtskraft $F_{GS}$ einander entgegen gerichtet sind, wirkt eine resultierende Gesamtkraft auf den Schwimmkörper 7, die nach unten gerichtet ist. Infolgedessen sinkt der Schwimmkörper 7 in Richtung Meeresgrund ab und leistet dabei über die auf die Seiltrommeln 19 aufgewickelten Zugseile 17 Arbeit, die von dem externen Generator 21 in elektrische Energie umgewandelt wird. Alternativ kann auch ein interner Generator (nicht dargestellt) vorgesehen sein.

Wenn der Schwimmkörper 7 absinkt, wird er durch Festhalten der Seile 17 in Rotation versetzt.

Die Strecke, welche der Schwimmkörper 7 zwischen dem oberen Punkt mit gefülltem Ballasttank und dem unteren Punkt zurücklegt ist mit "S" bezeichnet. Auf dem Weg des Schwimmkörpers 7 von oben in Richtung Meeresgrund wird eine Arbeit geleistet, nach der Formel

$$F = (F_{GS} - F_a) \times S.$$

Wenn der Schwimmkörper 7 die in Figur 5 dargestellte Position B erreicht hat, wird der Ballasttank 7 wieder entleert, beispielsweise durch Einblasen von Pressluft. Dadurch steigt der Schwimmkörper 7 wieder nach oben in die erste Position A und der Vorgang kann wiederholt werden.

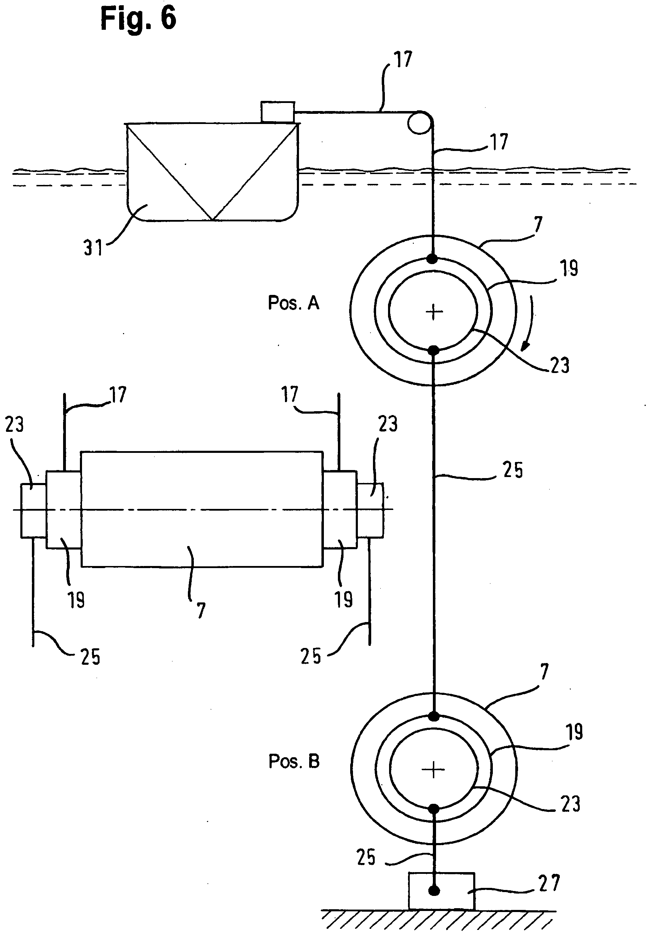

Zusätzlich dazu kann der Schwimmkörper 7 wie in der Figur 5 angedeutet auch noch durch das umgebende Wasser in Strömung versetzt werden, so dass sich die beiden Effekte, nämlich der Schwerkraft und der Rotation, überlagern und somit die Energieerzeugung erhöht wird. Bei dem Ausführungsbeispiel gemäß Figur 6 hat der Schwimmkörper 7 zusätzlich zu den Seiltrommel 19 an beiden Enden jeweils eine weitere Seiltrommel 23; auf welche Seile 25 aufgewickelt werden.

Die Seile 25 sind mit einer Gründung 27 am Boden des Gewässers befestigt. Die Seile 17 und 25 werden mit entgegengesetztem Drehsinn auf die Trommeln 19 bzw. 23 aufgewickelt.

Die Seile 25 werden dabei aufgewickelt, So dass an beiden Endpunkten entweder die Seile 17 oder die Seile 25 auf den zugehörigen Trommeln 19,23 aufgewickelt sind. Die anderen Seile 25 oder 17 sind dann abgewickelt.

Wenn der Schwimmkörper 7 von der Position B zur Position A aufsteigt, wird er durch Festhalten der Seile 25 in Rotation versetzt und die Seile 17 werden aufgewickelt, so dass an beiden Endpunkten A und B entweder die Seile 17 oder die Seile 25 auf den zugehörigen Trommeln 19, 23 aufgewickelt sind. Die anderen Seil 25 oder 17 sind dann abgewickelt.

Dadurch ist es möglich, den Schwimmkörper 7 sowohl beim Absteigen als auch beim Aufsteigen in Rotation zu versetzen. Außerdem kann der Schwimmkörper 7 auch noch durch das umgebende Wasser in Drehung versetzt werden.

Bei diesem Ausführungsbeispiel 6 ist ein interner Generator 21 dargestellt. Daher entspricht die Umwandlung in elektrische Energie mittels internem Generator 21 wie anhand der Figur 2 erläutert erfolgt.

Die Leistung des erfindungsgemäßen Kraftwerks kann durch die Abmessungen des Behälters 13, des Auftriebskörpers 15, die Wahl der Flüssigkeit in dem Behälter 13 und natürlich die Zahl der in einem Schwimmkörper 7 angeordneten Behälter 13 mit zugehörigen Einbauten und Peripherie skaliert werden.

Das erfindungsgemäße Kraftwerk kann ortsfest, das heißt direkt oder indirekt mit dem Ufer oder dem Grund des Gewässers in dem der Schwimmkörper schwimmt, installiert werden. Alternativ kann das Kraftwerk auch mit einem Schiff und/oder dem Boden des Gewässers verbunden sein.

Das erfindungsgemäße Kraftwerk erlaubt die

- CO2-freie,

- dezentrale,

- grundlastfähige und

- skalierbare

Erzeugung von elektrischer Energie.

Das Kraftwerk ist fertigungstechnisch gut zu beherrschen, unter anderem weil es in industriellem Maßstab unter Einsatz bekannter Verfahren der Metallbearbeitung mit großer Fertigungstiefe hergestellt wird. Es kommen weder beim Bau noch im Betrieb giftige oder umweltschädigende Substanzen zum Einsatz.

Bereits in Betrieb genommene Kraftwerke können, falls erforderlich, abgebaut und an anderer Stelle wieder aufgebaut werden.

**Patentansprüche**

1. Kraftwerk umfassend mindestens einen ganz oder teilweise mit einer Flüssigkeit gefüllten länglichen Behälter (13), wobei in dem Behälter (13) ein Auftriebskörper (15) angeordnet ist, und wobei eine (Relativ-)Bewegung des Auftriebskörpers (15) relativ zu dem Behälter (13) zur Stromerzeugung genutzt wird, **dadurch gekennzeichnet, dass** der mindestens eine Behälter (13, 13.2) in einem vorzugsweise zylindrischen Schwimmkörper (7) befestigt ist und dass der mindestens eine Behälter (13, 13.2) um eine Drehachse (9) drehbar gelagert ist, wobei eine Längsachse des Behälters (13, 13.2) im Wesentlichen lotrecht oder unter einen Winkel kleiner 90° zu der Drehachse (9) des Schwimmkörpers (7) verläuft.

2. Kraftwerk nach Anspruch 1, **dadurch gekennzeichnet, dass** eine Drehachse des Behälters (13) und eine Drehachse (9) des Schwimmkörpers (7) parallel zueinander verlaufen.

3. Kraftwerk nach einem der vorhergehenden Ansprüche, **dadurch gekennzeichnet, dass** der Behälter (13) und/oder der Schwimmkörper (7) drehantreibbar ist.

4. Kraftwerk nach einem der vorhergehenden Ansprüche, **dadurch gekennzeichnet, dass** der Schwimmkörper (7) durch die Strömungsgeschwindigkeit des ihn umgebenden Wassers angetrieben wird.

5. Kraftwerk nach Anspruch 4, **dadurch gekennzeichnet, dass** der Schwimmkörper (7) in einem Fließgewässer (Bach oder Fluss) schwimmt und die Strömungsgeschwindigkeit des Fließgewässers den Schwimmkörper (7) antreibt.

6. Kraftwerk nach Anspruch 4, **dadurch gekennzeichnet, dass** der Schwimmkörper (7) in einem stehenden Gewässer (See oder Meer) schwimmt oder schwebt, und dass eine Strömung an der Oberfläche oder unterhalb der Oberfläche des Gewässers den Schwimmkörper (7) antreibt.

7. Kraftwerk nach Anspruch 4, **dadurch gekennzeichnet, dass** der Schwimmkörper (7) von Wasserstrahldüsen, einem Segel oder durch einen Drachen in Drehung versetzt wird.

8. Kraftwerk nach einem der Ansprüche 2 bis 6, **dadurch gekennzeichnet, dass** der Behälter (13) durch Drehen des Schwimmkörpers (7) angetrieben wird.

9. Kraftwerk nach einem der vorhergehenden Ansprüche, **dadurch gekennzeichnet, dass** der Auftriebskörper (15) über ein Getriebe mit einem Generator (21) gekoppelt ist.

10. Kraftwerk nach Anspruch 9, **dadurch gekennzeichnet, dass** das Getriebe ein Zugmittelgetriebe (17, 19) ist.

11. Kraftwerk nach einem der Ansprüche 8 oder 10, **dadurch gekennzeichnet, dass** zwischen dem Getriebe (17, 19) und dem Auftriebskörper (15) eine schaltbare Kupplung vorgesehen ist.

12. Kraftwerk nach einem der vorhergehenden Ansprüche, **dadurch gekennzeichnet, dass** das Kraftwerk mindestens einen Ballasttank aufweist, und dass der mindestens eine Ballasttank auch während des Betriebs des Kraftwerks mit Ballast, bevorzugt einer Flüssigkeit, befüllt oder entleert werden kann.

13. Kraftwerk nach Anspruch 12, **dadurch gekennzeichnet, dass** das Befüllen und Entleeren des mindestens einen Ballasttanks durch eine Pumpe, bevorzugt eine elektrisch angetriebene Pumpe, erfolgt.

14. Kraftwerk nach Anspruch 12 oder 13, **dadurch gekennzeichnet, dass** das Kraftwerk in Abhängigkeit des Füllstands des mindestens einen Ballasttanks schwimmt, schwebt, sinkt oder steigt.

15. Kraftwerk nach einem der Ansprüche 12 bis 14, **dadurch gekennzeichnet, dass** der oder die Behälter (13) und/oder der Schwimmkörper (7) als Ballasttanks dienen.

16. Kraftwerk nach einem der vorhergehenden Ansprüche, **dadurch gekennzeichnet, dass** mehrere Behälter (13, 13.2) und Auftriebskörper (15, 15.2) nebeneinander in einem Schwimmkörper (7) angeordnet sind.

17. Kraftwerk nach Anspruch 16, **dadurch gekennzeichnet, dass** die Behälter (13, 13.2) und Auftriebskörper (15, 15.2) in Drehrichtung versetzt zueinander angeordnet sind.

18. Kraftwerk nach einem der vorhergehenden Ansprüche, **dadurch gekennzeichnet, dass** der Schwimmmkörper (7) als Ballasttank dient, und dass an den Enden des Schwimmkörpers (7) eine Seiltrommel (19) oder zwei Seiltrommeln (19, 23) fest montiert sind.

19. Kraftwerk nach Anspruch 18, **dadurch gekennzeichnet, dass** auf die Seiltrommeln (19, 23) Seile aufgewickelt sind und dass die einen Seile gegensinnig zu den anderen Seilen aufgewickelt sind.

20. Kraftwerk nach einem der vorhergehenden Ansprüche, **dadurch gekennzeichnet, dass** der Schwimmkörper (7) einen internen Generator (21) aufweist.

21. Kraftwerk nach einem der vorhergehenden Ansprüche, **dadurch gekennzeichnet, dass** ein Rotationsdrehmoment des Schwimmkörpers (7) beim Auf- und Absteigen energetisch genutzt wird.

**Claims**

1. A power plant, comprising at least one elongated vessel (13) filled completely or partially with a liquid, a lifting body (15) being arranged in said vessel (13) and a (relative) movement of said lifting body (15) relative to said vessel (13) being used for generating electricity, **characterized in that** said at least one vessel (13, 13.2) is mounted in a preferably cylindrical floating body (7), and that said at least one vessel (13, 13.2) is mounted rotatably around a rotation axis (9), the longitudinal axis of said vessel (13, 13.2) running essentially perpendicular or at an angle smaller than 90° to said rotation axis (9) of said floating body (7).

2. The power plant according to claim 1, **characterized in that** a rotation axis of said vessel (13) and a rotation axis (9) of said floating body (7) run parallel to each other.

3. The power plant according to any one of the preceding claims, **characterized in that** said vessel (13) and/or said floating body (7) are drivable in rotation.

4. The power plant according to any one of the preceding claims, **characterized in that** said floating body (7) is driven by the flow velocity of the surrounding water.

5. The power plant according to claim 4, **characterized in that** said floating body (7) swims in streaming water (stream or river), and that the flow velocity of the streaming water drives said floating body (7).

6. The power plant according to claim 4, **characterized in that** said floating body (7) swims or floats in stagnant water (lake or sea), and that a current on the surface or under the surface of the waters drives said floating body (7).

7. The power plant according to claim 4, **characterized in that** said floating body (7) is rotated by water jet nozzles, a sail or a kite.

8. The power plant according to any one of claims 2 to 6, **characterized in that** said vessel (13) is driven by a rotation of said floating body (7).

9. The power plant according to any one of the preceding claims, **characterized in that** said lifting body (15) is coupled to a generator (21) by means of a gearing.

10. The power plant according to claim 9, **characterized in that** the gearing is a traction mechanism gearing (17, 19).

11. The power plant according to any one of claims 9 or 10, **characterized in that** a shiftable clutch is provided between said gearing (17, 19) and said lifting body (15).

12. The power plant according to any one of the preceding claims, **characterized in that** the power plant comprises at least one ballast tank, and that said at least one ballast tank can also during operation of the power plant be filled with ballast, preferably a liquid, or be emptied.

13. The power plant according to claim 12, **characterized in that** the filling and emptying of said at least one ballast tank is carried out by means of a pump, preferably an electrically driven pump.

14. The power plant according to claim 12 or 13, **characterized in that** the power plant swims, floats, sinks or rises dependent on the fluid level of said at least one ballast tank.

15. The power plant according to any one of claims 12 to 14, **characterized in that** said vessel(s) (13) and/or said floating body (7) serve as ballast tanks.

16. The power plant according to any one of the preceding claims, **characterized in that** several vessels (13, 13.2) and lifting bodies (15, 15.2) are arranged next to each other in a floating body (7).

17. The power plant according to claim 16, **characterized in that** said vessels (13, 13.2) and lifting bodies (15, 15.2) are arranged offset to each other in the sense of rotation.

18. The power plant according to any one of the preceding claims, **characterized in that** said floating body (7) serves as a ballast tank, and that a cable drum (19) or two cable drums (19, 23) are fixedly mounted at the ends of said floating body (7).

19. The power plant according to claim 18, **characterized in that** ropes are wound up on the cable drums (19, 23), and that the ones of the ropes are wound up in the opposite direction of the other ropes.

20. The power plant according to any one of the preceding claims, **characterized in that** said floating body (7) has an internal generator (21).

21. The power plant according to any one of the preceding claims, **characterized in that** a rotational torque of said floating body (7) is used energetically during the rising and sinking of the power plant.


**Revendications**

1. Centrale électrique, comportant au moins un récipient oblong (13) rempli complètement ou partiellement d'un liquide, un corps à force ascensionnelle (15) étant prévu dans ledit récipient (13) et un mouvement (relatif) dudit corps à force ascensionnelle (15) relatif audit récipient (13) étant utilisé pour la production électrique, **caractérisée en ce que** ledit au moins un récipient (13, 13.2) est fixé dans un corps flottant (7) préférablement cylindrique, et que ledit au moins un récipient (13, 13.2) est monté pivotant autour d'un axe de rotation (9), un axe longitudinal dudit récipient (13, 13.2) s'étendant essentiellement verticalement ou formant un angle inférieur à 90° par rapport à l'axe de rotation (9) dudit corps flottant (7).

2. Centrale électrique selon la revendication 1, **caractérisée en ce qu'**un axe de rotation dudit récipient (13) et un axe de rotation (9) dudit corps flottant (7) s'étendent parallèlement l'un avec l'autre.

3. Centrale électrique selon l'une des revendications précédentes, **caractérisée en ce que** ledit récipient (13) et/ou ledit corps flottant (7) peuvent être entrainés en rotation.

4. Centrale électrique selon l'une des revendications précédentes, **caractérisée en ce que** ledit corps flottant (7) est entraîné par la vitesse d'écoulement de l'eau entourant le corps flottant (7).

5. Centrale électrique selon la revendication 4, **caractérisée en ce que** ledit corps flottant (7) nage dans des eaux courantes (ruisseau ou fleuve), et que la vitesse d'écoulement des eaux courantes entraîne ledit corps flottant (7).

6. Centrale électrique selon la revendication 4, **caractérisée en ce que** ledit corps flottant (7) nage ou flotte dans l'eau dormante (lac ou mer), et qu'un courant à la surface ou sous la surface de l'eau entraîne ledit corps flottant (7).

7. Centrale électrique selon la revendication 4, **caractérisée en ce que** ledit corps flottant (7) est tourné par un jet d'eau, une voile ou un cerf-volant.

8. Centrale électrique selon l'une des revendications 2 à 6, **caractérisée en ce que** ledit récipient (13) est entraîné par une rotation dudit corps flottant (7).

9. Centrale électrique selon l'une des revendications précédentes, **caractérisée en ce que** ledit corps à force ascensionnelle (15) est couplé à un générateur (21) au moyen d'une transmission.

10. Centrale électrique selon la revendication 9, **caractérisée en ce que** ladite transmission est une transmission d'un mécanisme de traction (17, 19).

11. Centrale électrique selon l'une des revendications 9 ou 10, **caractérisée en ce qu'**un embrayage commutable est prévu entre ladite transmission (17, 19) et ledit corps à force ascensionnelle (15).

12. Centrale électrique selon l'une des revendications précédentes, **caractérisée en ce que** la centrale électrique comporte au moins un réservoir de ballast, et que ledit au moins un réservoir de ballast peut être rempli de ballast, préférablement un liquide, ou vidé aussi lors de l'opération de ladite centrale électrique.

13. Centrale électrique selon la revendication 12, **caractérisée en ce que** le remplissage et la vidage dudit au moins un réservoir de ballast sont effectués au moyen d'une pompe, préférablement une pompe entraînée électriquement.

14. Centrale électrique selon la revendication 12 ou 13, **caractérisée en ce que** ladite centrale électrique nage, flotte, baisse ou monte selon le niveau de liquide dudit au moins un réservoir de ballast.

15. Centrale électrique selon l'une des revendications 12 à 14, **caractérisée en ce que** ledit récipient ou lesdits récipients (13) et/ou ledit corps flottant (7) servent comme des réservoirs de ballast.

16. Centrale électrique selon l'une des revendications précédentes, **caractérisée en ce que** la pluralité de récipients (13, 13.2) et de corps à force ascensionnelle (15, 15.2) sont prévus côté à côté dans un corps flottant (7).

17. Centrale électrique selon la revendication 16, **caractérisée en ce que** lesdits récipients (13, 13.2) et lesdits corps à force ascensionnelle (15, 15.2) sont disposés en quinconce dans le sens de rotation.

18. Centrale électrique selon l'une des revendication précédentes, **caractérisée en ce que** ledit corps flottant (7) serve comme un réservoir de ballast, et qu'un tambour de câble (19) ou deux tambours de câble (19, 23) sont fixés aux bouts dudit corps flottant (7).

19. Centrale électrique selon la revendication 18, **caractérisée en ce que** des câbles sont enroulés sur les tambours de câble (19, 23), et que lesdits câbles sont enroulés dans le sens opposé par rapport aux autres câbles.

20. Centrale électrique selon l'une des revendications précédentes, **caractérisée en ce que** ledit corps flottant (7) comporte un générateur (21) interne.

21. Centrale électrique selon l'une des revendications précédentes, **caractérisée en ce qu'**un couple de rotation dudit corps flottant (7) est utilisé énergétiquement lors de la montée et la descente.

## Fig. 1

Input → Rotations-Energie (1)

Potenzielle + kinetische Energie im Auftriebskörper (3)

elektrische Energie (5) → Output

## Fig. 2

# Fig. 3a

# Fig. 3b

# Fig. 3c

**Fig. 4**

a )

Modul 1

Modul 2

b )

1

6

2

5

4

3

7

# Fig. 5

# Fig. 6

Pos. A

Pos. B

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012031090 A1
- WO 2012044525 A1
- US 2003214135 A1